## Europäisches Patentamt
## European Patent Office
## Office européen des brevets

(19)

(11) Veröffentlichungsnummer: **0 571 836 B1**

(12)
# EUROPÄISCHE PATENTSCHRIFT

(45) Veröffentlichungstag der Patentschrift: **13.12.95**

(51) Int. Cl.6: **C09C 1/00**, C09C 1/62, C09C 1/64

(21) Anmeldenummer: **93107854.7**

(22) Anmeldetag: **14.05.93**

(54) **Glanzpigmente auf der Basis von mehrfach beschichteten plättchenförmigen metallischen Substraten**

(30) Priorität: **27.05.92 DE 4217511**

(43) Veröffentlichungstag der Anmeldung:
**01.12.93 Patentblatt 93/48**

(45) Bekanntmachung des Hinweises auf die
Patenterteilung:
**13.12.95 Patentblatt 95/50**

(84) Benannte Vertragsstaaten:
**CH DE FR GB IT LI**

(56) Entgegenhaltungen:
EP-A- 0 033 457     EP-A- 0 328 906
EP-A- 0 338 428     EP-A- 0 499 864
EP-A- 0 525 526     DE-A- 4 104 310

DATABASE WPI Section Ch, Week 8814, Derwent Publications Ltd., London, GB; Class A60, AN 88-094529 & JP-A-63 043 962 (SHISEIDO K.K) 25. Februar 1988

(73) Patentinhaber: **BASF Aktiengesellschaft
Carl-Bosch-Strasse 38
D-67063 Ludwigshafen (DE)**

(72) Erfinder: **Schmid, Raimund, Dr.
Im Falkenhorst 1
W-6730 Neustadt (DE)**
Erfinder: **Mronga, Norbert, Dr.
Ringstrasse 2
W-6915 Dossenheim (DE)**

Rank Xerox (UK) Business Services
(3.10/3.09/3.3.3)

## Beschreibung

Die vorliegende Erfindung betrifft neue Glanzpigmente auf der Basis von mehrfach beschichteten plättchenförmigen metallischen Substraten mit

A) einer ersten, farblosen oder selektiv absorbierenden Schicht aus Metalloxid,

B) einer zweiten, nichtselektiv absorbierenden Schicht aus Kohlenstoff, Metall und/oder Metalloxid und

c) gewünschtenfalls einer dritten, farblosen oder selektiv absorbierenden Schicht aus Metalloxid.

Weiterhin betrifft die Erfindung die Herstellung dieser Glanzpigmente sowie ihre Verwendung zum Einfärben von Lacken, Druckfarben, Kunststoffen, Gläsern, keramischen Produkten und Zubereitungen der dekorativen Kosmetik.

Glanz- oder Effektpigmente werden in zunehmendem Maße in vielen Bereichen der Technik eingesetzt, beispielsweise in Automobillacken, in der dekorativen Beschichtung, der Kunststoffeinfärbung, in Druck-, Anstrich-, insbesondere Sicherheitsfarben sowie in der Kosmetik.

Ihre optische Wirkung beruht auf der gerichteten Reflexion an überwiegend flächig ausgebildeten, ausgerichteten metallischen oder stark lichtbrechenden Pigmentteilchen. Je nach Art der Pigmentteilchen spricht man auch von Metalleffektpigmenten (z.B. Aluminium, Zink, Kupfer oder deren Legierungen) oder Perlglanzpigmenten (z.B. auf Basis beschichteter Glimmer wie Muskovit, Phlogopit und Biotit, Talkum oder Glas).

Die Glanzpigmente können durch Beschichtung der Ausgangssubstrate mit dünnen Filmen aus hochbrechenden Oxiden wie Chrom(III)oxid, vor allem Eisenoxid und Titanoxid mehrphasig aufgebaut sein. Durch Interferenz und gegebenenfalls Absorption ergibt sich in diesen Fällen in Abhängigkeit von der Dicke der Oxidschicht eine Vielzahl von Farbtonvariationen; man nennt diese Pigmente daher auch Interferenzpigmente.

Durch die gerichtete Reflexion des einfallenden Lichtes an den plättchenförmigen Pigmentteilchen zeigen die z.B. in Lack ausgerichteten beschichteten Glanzpigmente Goniochromatizität, d.h. der Farbeindruck (Helligkeit und/oder Farbton und/oder Farbsättigung) ihrer Lackierung ändert sich in Abhängigkeit vom Belichtungs- bzw. Betrachtungswinkel. Diese Effekte lassen sich auf ein kompliziertes Zusammenspiel von Reflexion und Transmission des auftreffenden Lichts zurückführen, wobei dessen Farbe durch an den Pigmentteilchen hervorgerufene Phänomene wie Interferenz an dünnen Schichten und Absorption an farbigen Zentren verändert werden kann.

Oxidbeschichtete Metalleffektpigmente kann man auch Interferenzreflexionspigmente nennen, da der Farbeindruck, den diese Pigmente in applizierter Form beim Betrachter hervorrufen, durch eine Kombination von Interferenz- und Reflexionserscheinungen entsteht.

Aus der EP-A-33 457 sind metallische Interferenzreflexionspigmente bekannt, die aus mit einer $Fe_2O_3$-Schicht belegten Aluminiumplättchen bestehen. Besonders farbtonbrillante Pigmente sind hier im gelben bis roten Bereich (von Gold über Orange und Rot bis Violett) zu erhalten, wenn die Interferenzfarbe der $Fe_2O_3$-Schicht aufgrund geeigneter Schichtdicke mit ihrer Absorptionsfarbe übereinstimmt.

In der DE-A-38 13 335 sind Interferenzreflexionspigmente auf der Basis $TiO_2$-beschichteter Aluminiumpigmente beschrieben, die Interferenzfarben über den gesamten Farbbereich, also Gold, Rot, Blau und Grün zeigen. Zur Intensivierung des Farbeindrucks, der aufgrund des insbesondere bei Metalleffektpigmenten hohen Weißlichtanteils des reflektierten Lichts nur schwach ist, wird die $TiO_2$-Schicht bei hohen Temperaturen mit Ammoniak oberflächlich zu dunkel gefärbten niederen Titanoxiden und Titannitrid reduziert. Durch die so aufgebrachte dunkle Schicht wird der Weißlichtsockel abgesenkt, und die Pigmente weisen eine der jeweiligen Interferenzfarbe entsprechende Körperfarbe auf. Die Pigmente können außerdem noch mit einer zusätzlichen Metalloxidschicht belegt sein. Problematisch ist hier jedoch die Reduktion des Titandioxids mit Ammoniak, da aufgrund der hierfür erforderlichen Temperaturen eine Verformung der Aluminiumplättchen und auch eine exotherme Reaktion von $TiO_2$ mit Aluminium unter Bildung von Titan und Aluminiumoxid nicht auszuschließen sind.

Der Erfindung lag daher die Aufgabe zugrunde, neue farbstarke Metalleffektpigmente bereitzustellen, die zudem sicher und reproduzierbar herzustellen sind.

Demgemäß wurden die eingangs definierten Glanzpigmente gefunden.

Weiterhin wurde ein Verfahren zur Herstellung der Glanzpigmente gefunden, welches dadurch gekennzeichnet ist, daß man das metallische Substrat zunächst

a) durch Gasphasenzersetzung flüchtiger Metallverbindungen in Gegenwart von Sauerstoff und/oder Wasserdampf mit einer farblosen oder selektiv absorbierenden Metalloxidschicht, dann

b1) durch thermische Zersetzung von sauerstoffhaltigen Kohlenwasserstoffen, die bei zwei enthaltenen Kohlenstoffatomen mindestens ein Sauerstoffatom enthalten, mit einer Kohlenstoffschicht,

b2) durch Gasphasenzersetzung flüchtiger Metallverbindungen in einem Inertgas mit einer Metallschicht oder

b3) durch Gasphasenzersetzung flüchtiger Metallverbindungen in Gegenwart von Sauerstoff und/oder Wasserdampf mit einer nichtselektiv absorbierenden Metalloxidschicht und gewünschtenfalls anschließend

c) wie in Schritt a) mit einer weiteren, farblosen oder selektiv absorbierenden Metalloxidschicht belegt.

Außerdem wurde die Verwendung dieser Glanzpigmente zur Einfärbung von Lacken, Druckfarben, Kunststoffen, Gläsern, keramischen Produkten und Zubereitungen der dekorativen Kosmetik gefunden.

Für die erfindungsgemäßen Pigmente sind als Substrat alle für Metalleffektpigmente bekannten Metalle in Plättchenform geeignet. Z.B. kommen neben Kupfer und seinen Legierungen wie Messing oder Bronzen vor allem Aluminium und seine Legierungen wie Aluminiumbronze in Betracht.

Besonders günstig sind Aluminiumplättchen, die in einfacher Weise durch Herausstanzen aus Aluminiumfolie oder nach üblichen Verdüsungs- oder Mahltechniken herzustellen sind.

Die Größe der Aluminiumteilchen ist an sich nicht kritisch und kann auf den jeweiligen Anwendungszweck abgestimmt werden. In der Regel haben die Teilchen mittlere größte Durchmesser von etwa 5 bis 120 $\mu$m, insbesondere 5 bis 40 $\mu$m. Ihre spezifische freie Oberfläche (BET) beträgt im allgemeinen 0,5 bis 5 m²/g.

Die Oberfläche der Aluminiumteilchen sollte weitgehend frei von Fetten oder anderen Belegmitteln sein. Es können handelsübliche Produkte eingesetzt werden.

Die erfindungsgemäßen Glanzpigmente zeichnen sich durch eine Mehrfachbeschichtung des metallischen Substrates aus.

Die erste Schicht (A) ist aus den üblichen zur Beschichtung von Interferenzpigmenten geeigneten farblosen oder selektiv absorbierenden (d.h. nicht schwarzen) Metalloxiden aufgebaut. Als bevorzugte Beispiele seien Zirkon-, Silicium-, Zinn-, Chrom- und Eisenoxid sowie deren Mischungen genannt. Besonders bevorzugt ist Titandioxid.

Die Dicke der Schicht (A) ist an sich nicht kritisch und beträgt im allgemeinen 1 bis 500 nm, bevorzugt 10 bis 300 nm, wobei darauf zu achten ist, daß eine transparente Schicht vorliegt.

Die zweite, nichtselektiv absorbierende Schicht (B) besteht im wesentlichen aus Kohlenstoff, Metallen, insbesondere solchen, die durch Gasphasenzersetzung flüchtiger Verbindungen aufgebracht werden können, wie vor allem Eisen, auch Cobalt, Nickel, Chrom, Molybdän und Wolfram, oder schwarzen Metalloxiden wie vor allem Magnetit, auch Nickeloxid, Cobaltoxid ($CoO$, $Co_3O_4$) und Vanadinoxid ($VO_2$, $V_2O_3$) sowie deren Mischungen wie besonders Eisen und Magnetit.

Die schwarze Schicht (B) darf selbstverständlich nicht deckend sein, sondern muß für Licht halbdurchlässig sein. Auf diese Weise senkt sie den Weißsockel des auftreffenden und reflektierten Lichtes ab und bewirkt so eine Verstärkung der Interferenzfarbe des mit Metalloxid beschichteten Substrates und setzt bei entsprechender Schichtdicke auch dessen Interferenzreihe fort. Im allgemeinen betragen die Schichtdicken 5 bis 200 nm, vorzugsweise 10 bis 50 nm.

Weiterhin können die erfindungsgemäßen Glanzpigmente noch eine dritte Schicht (C) aufweisen, die wie die Schicht (A) aus hochbrechenden, farblosen oder selektiv absorbierenden Metalloxiden aufgebaut ist. Auch hier sind z.B. Zirkon-, Silicium-, Zinn- und Chromoxid bevorzugt und Eisenoxid und Titandioxid besonders bevorzugt. Diese Deckschicht bewirkt insbesondere bei metallischen Schichten (B) eine deutliche Verbesserung der Beständigkeit gegen Umwelteinflüsse.

Die Dicke der Schicht (C) ist an sich nicht kritisch, im allgemeinen beträgt sie etwa 1 bis 400 nm, insbesondere 5 bis 200 nm.

Selbstverständlich trägt auch die Schicht (C) zur Interferenz des Pigmentes bei, sie führt die Interferenzreihe an der durch das mit (A) und (B) beschichtete Substrat bestimmten Stelle fort. Handelt es sich um eine farbige Oxidschicht, so erscheint mit wachsender Schichtdicke bei den z.B. in Lack, Druck oder Kunststoff applizierten Pigmenten bei höheren Betrachtungswinkeln zunehmend die Eigenfarbe des Metalloxids.

Entsprechend ist bei den erfindungsgemäßen zweifach beschichteten Glanzpigmenten der Farbflop von der Interferenzfarbe nach Schwarz bis Grau zu beobachten.

Insgesamt zeichnen sich bei den erfindungsgemäßen Glanzpigmenten alle Schichten durch gleichmäßigen, homogenen, filmartigen Aufbau aus, der aus der erfindungsgemäßen Herstellung resultiert und sich z.B. in der elektrischen Leitfähigkeit einer aus Metall, insbesondere Molybdän, oder auch Magnetit bestehenden Schicht (B) zeigt.

Bei dem erfindungsgemäßen Verfahren zur Herstellung der mehrfach beschichteten plättchenförmigen metallischen Substrate werden die einzelnen Beschichtungen jeweils durch thermische Zersetzung geeigneter Ausgangsverbindungen in Gegenwart der zu belegenden Substratteilchen vorgenommen.

Die Belegung mit Metalloxid- und Metallschichten [Schritte a), b2), b3) und gegebenenfalls c)] erfolgt dabei vorzugsweise in einem beheizbaren Wirbelschichtreaktor, wie er beispielsweise in der EP-A-33 457 oder der DE-A-38 13 335 beschrieben ist, in dem die unbeschichteten oder bereits ein- oder zweifach beschichteten Substratteilchen zunächst mit einem Wirbelgas fluidisiert und auf die für die Zersetzung der jeweiligen Metallverbindung erforderliche Temperatur von in der Regel 70 bis 350°C erhitzt werden. Die verdampften Metallverbindungen und die gegebenenfalls zur Zersetzung benötigten Gase werden dann über getrennte Düsen eingetragen.

Zur Abscheidung der ersten und der dritten, farblosen oder selektiv absorbierenden Schicht aus Metalloxid und auch einer zweiten, beispielsweise aus Nickel- oder Cobaltoxid bestehenden schwarzen Schicht [Schritte a), b3) und c)] werden flüchtige Metallverbindungen, bevorzugt die Carbonyle, Halogenide, insbesondere die Chloride, und die Alkoholate, sowohl aromatische wie Phenolate und Benzylalkoholate als auch aliphatische, vor allem $C_1$-$C_4$-Alkanolate wie n-, iso- und tert.-Butanolate, bevorzugt Methanolate und Ethanolate und besonders bevorzugt n- und iso-Propanolate zersetzt. Die Carbonyle werden dabei zweckmäßigerweise durch Sauerstoff im Gemisch im Stickstoff (z.B. Luft) oxidiert, während die Halogenide und Alkoholate durch Wasserdampf hydrolysiert werden, wobei im Fall der Halogenide Sauerstoff (bzw. Luft) anwesend sein kann. Dabei muß mindestens die stöchiometrisch zur Bildung des gewünschten Oxids und im Fall der Carbonyle von Kohlendioxid erforderliche Menge Sauerstoff oder Wasserdampf zugeführt werden, man kann jedoch auch mit einem geringen Überschuß arbeiten. Bei dieser Belegung kann sowohl Stickstoff als auch Luft als Wirbelgas dienen.

Bevorzugte Metallverbindungen sind Eisenpentacarbonyl, Chromhexacarbonyl, Aluminiumchlorid, Silicium-, Zinn-, Titan- und Zirkontetrachlorid, Vanadinoxychlorid sowie Titan- und Zirkon-n- und -iso-propanolat. Welche Metallverbindung am günstigsten eingesetzt wird, hängt bei Schritt c) von der Art der bereits aufgebrachten zweiten Schicht ab. Handelt es sich beispielsweise um eine Metallschicht, dann werden vorzugsweise die Carbonyle oder Alkoholate eingesetzt.

Zur Abscheidung einer metallischen zweiten Schicht [Schritt b2)] werden bevorzugt die entsprechenden Metallcarbonyle eingesetzt, wie vor allem Eisenpentacarbonyl, auch Chrom-, Molybdän- und Wolframhexacarbonyl, daneben Nickeltetracarbonyl und dimeres Cobalttetracarbonyl, die in einem Schutzgas wie Stickstoff oder Argon, das auch zur Verwirbelung des Substrats benutzt wird, zu den jeweiligen Metallen thermisch zersetzt werden.

Soll die zweite, schwarze Schicht aus niederen Metalloxiden, wie Magnetit, $VO_2$ oder $V_2O_3$, bestehen [Schritt b3)], dann werden zweckmäßigerweise die Metallcarbonyle wie Eisenpentacarbonyl oder Oxychloride wie Vanadinoxychlorid mit Wasserdampf hydrolysiert. Zur Dosierung des Wasserdampfs wird ein inertes Trägergas, vor allem Stickstoff, mit dem auch das Substrat verwirbelt wird, mit Wasserdampf beladen. Werden bei dieser Gasphasenzersetzung zunächst höhere Metalloxide, beispielsweise $V_2O_5$ abgeschieden, so müssen diese anschließend z.B. mit Wasserstoff oder Ammoniak zum gewünschten Oxid reduziert werden.

Für alle Beschichtungen werden die Metallverbindungen zweckmäßigerweise in einer dem Reaktor vorgeschalteten Verdampfervorlage verdampft und mit einem Trägergas, je nach den erforderlichen Reaktionsbedingungen in der Regel Luft oder Stickstoff, in den Reaktor transportiert.

Um das Substrat gleichmäßig und vollständig umhüllende, homogene Schichten zu erhalten, sollte die Gasmenge der Metallverbindung im allgemeinen nicht mehr als 5 Vol.-%, vorzugsweise nicht mehr als 2 Vol.-% der Gesamtgasmenge im Reaktor betragen.

Soll nach der ersten Metalloxidschicht eine zweite, schwarze Schicht aus Metall oder Metalloxid aufgebracht werden, so muß das Produkt nach beendeter Belegung nicht zwischenisoliert werden, vielmehr kann die zweite Beschichtung vorteilhaft direkt anschließend an die erste Beschichtung, gewünschtenfalls nach leichter Temperaturerniedrigung und erforderlichenfalls nach Austausch des Wirbelgases, in demselben Reaktor vorgenommen werden. Beim Aufbringen einer dritten Schicht aus Metalloxid kann man selbstverständlich ebenso vorgehen.

Handelt es sich bei der aufgebrachten Schicht um ein Metall oder ein niederes Metalloxid, das die äußere Schicht des Pigmentes bilden soll, so wird dem Wirbelgas beim Abkühlen vorzugsweise Luft zugemischt, um die Schichtoberfläche durch Oxidation zu passivieren. Das abgekühlte Produkt wird dann wie üblich ausgetragen.

Zur Belegung der metalloxidbeschichteten Substrate mit einer zweiten Schicht aus Kohlenstoff werden vorzugsweise sauerstoffhaltige Kohlenwasserstoffe eingesetzt, die bei zwei enthaltenen C-Atomen mindestens ein O-Atom enthalten, wie Polyvinylalkohol, vor allem Sorbit, und insbesondere Verbindungen der Summenformel $(CH_2O)_n$, in der n für eine monomere Einheit in der Regel für 1 bis 6, vor allem für 5 bis 6 steht. Dabei handelt es sich bevorzugt um niedermolekulare Zucker wie Glucose und Dextrose, daneben sind auch höhermolekulare Zucker wie Stärke und polymere Verbindungen wie Polyoxymethylen geeignet.

Zweckmäßigerweise bringt man diese Verbindungen, insbesondere Zucker, zunächst feinverteilt auf die Substratoberfläche auf. Besonders vorteilhaft wird dazu ein dicker Brei aus Substrat, Zucker und einem geeigneten Lösungsmittel, z.B. Ethanol, hergestellt. Es ist aber auch möglich, das Substrat in einer Zuckerlösung zu rühren und die auf diese Weise mit einem Lösungsmittel enthaltenden Zuckerfilm überzogenen Substratteilchen anschließend abzufiltrieren. Weiterhin können Substrat und besonders fein gemahlener Zucker auch trocken gemischt werden. In der Regel werden 0,1 bis 20 Gew.-%, vorzugsweise 1 bis 10 Gew.-% Zucker, bezogen auf die Substratmenge, eingesetzt.

Die thermische Zersetzung der zweckmäßigerweise z.B. in einem Trockenschrank oder im Sprühtrockner vorgetrockneten Zuckerschicht zu Kohlenstoff kann dann in einem Drehkugelofen erfolgen, wobei je nach Ausgangsverbindungen Temperaturen von im allgemeinen 100 bis 500°C, insbesondere 200 bis 400°C erforderlich sind. Vorzugsweise wird dabei unter einem Schutzgas wie Stickstoff gearbeitet. Das entstehende Wasser dampft ab, und der Kohlenstoff bleibt als homogener, optisch halbdurchlässiger Film auf dem Substrat zurück. Von besonderem Vorteil sind bei der erfindungsgemäßen Beschichtung mit Kohlenstoff die niedrigen Reaktionstemperaturen von unter 500°C, die Beschädigungen des Trägermaterials verhindern.

Anschließend kann gewünschtenfalls wie üblich eine dritte Beschichtung mit farblosem oder selektiv absorbierendem Metalloxid erfolgen.

Selbstverständlich können beim erfindungsgemäßen Verfahren bereits auch auf andere Weise, z.B. durch Auffällen aus einem organischen Lösungsmittel, mit Metalloxid belegte Substratteilchen als Ausgangsmaterial eingesetzt werden. Aus der DE-A-35 34 477 ist beispielsweise die Belegung von Aluminiumpigmenten mit $Fe_2O_3$ aus alkoholischen Lösungen von Eisensalzen und aus der EP-A-328 906 die Belegung mit $TiO_2$ aus alkoholischen Lösungen von organischen Titansäureestern bekannt. Schritt a) würde in diesem Fall entfallen. Jedoch werden die aus der Gasphase beschichteten Substrate aufgrund der besseren Qualität stets zu bevorzugen sein.

Das erfindungsgemäße Verfahren ermöglicht die Herstellung mehrfach beschichteter Glanzpigmente auf einfache Weise. Die Dicke der erzeugten Schichten kann gezielt und reproduzierbar über die Beschichtungsdauer, die Konzentration der eingesetzten Metallverbindung und das Verhältnis von vorgelegten Pigmentteilchen zu eingeleiteter Metallverbindung auf den gewünschten Wert eingestellt werden. Die auf diese Weise erhaltenen Glanzpigmente zeichnen sich durch hohe Qualität der Beschichtung, d.h. durch homogene, gleichmäßige, die Substratteilchen filmartig umhüllende Schichten aus, was sich in einer Leitfähigkeit der zweifach mit äußerer Metall- (z.B. Molybdän-) oder auch Magnetitschicht belegten Pigmente und durch die Farbtonreinheit und Farbstärke sowohl der zweifach als auch der dreifach belegten Pigmente zeigt.

Die erfindungsgemäßen Glanzpigmente eignen sich vorteilhaft für viele Zwecke, wie zur Einfärbung von Lacken, Druckfarben, Kunststoffen, Gläsern, keramischen Produkten und Zubereitungen der dekorativen Kosmetik. Durch ihre speziellen Eigenschaften ergeben sich weitere besondere Anwendungsmöglichkeiten. Für die metallbeschichteten Pigmente ist beispielsweise der Einsatz in elektrisch leitfähigen oder elektromagnetische Wellen abschirmenden Kunststoffen, Lacken und Beschichtungen oder in leitfähigen Polymeren denkbar. Der ausgeprägte Hell/Dunkel-Flop beim Abkippen der applizierten schwarz beschichteten Pigmente bzw. der Farbflop der dreifach, mit farbigem Oxid beschichteten Pigmente ermöglicht die Herstellung von Sicherheits- und Effektfarben, vor allem für den Wertpapierdruck und zur Herstellung von fälschungssicheren Dokumenten. Durch das ausgezeichnete Deckvermögen insbesondere der dreifach beschichteten Pigmente kann vielfach auf sonst erforderliche Grundierungen verzichtet werden, was z.B. bei der Automobillackierung von besonderem Interesse ist.

Beispiele

Herstellung von erfindungsgemäßen Glanzpigmenten

Die in den Beispielen beschriebenen Beschichtungen von Aluminiumpigmenten wurden jeweils in einem von außen beheizbaren Wirbelschichtreaktor aus Glas mit einem Durchmesser von 8 cm und einer Höhe von 80 cm mit Glasfrittenboden und oben eingehängten, mit einem Stickstoff-Jet abreinigenden Filterstrümpfen und zwei seitlich oberhalb des Frittenbodens eingebrachten Düsen zur Gaseinleitung durchgeführt.

Zur Beurteilung der Koloristik der erhaltenen Pigmente wurden je 0,4 g der Pigmentproben in 3,6 g eines Polyester-Mischlackes mit 21 Gew.-% Feststoffanteil eingerührt und 2 Minuten lang im Red Devil dispergiert. Mit einer Rakel (160 μm Naßfilmdicke) wurden anschließend auf einem schwarzweißen Karton Abzüge der pigmentierten Lacke angefertigt. Die Messung der CIELAB-Werte erfolgte nach dem Trocknen des Films mit einem DATACOLOR Spektralphotometer MCS 111 mit Metallic-Meßkopf GK 111 bei einer Winkel-Differenz von 20° - 70° zum Glanzwinkel. Die Angaben der Farbwerte (L, a*, b*) beziehen sich auf die Normlichtart D 65 und einen Betrachtungswinkel von 25°. Dabei entspricht L der Helligkeit, a* dem Rot- bzw. Grünanteil und b* dem Blau- bzw. Gelbanteil. H ist der Farbwinkel und C das Chroma. Gemessen wurde über weißem Untergrund an einfach abgerakelten Proben.

A) Herstellung von zweifach beschichteten Glanzpigmenten

Beispiel 1

a) Eine Mischung aus 100 g Aluminiumpulver (mittlerer Teilchendurchmesser 20 $\mu$m, BET-Oberfläche 4,5 m$^2$/g) und 100 g gröberem Aluminiumpulver (mittlerer Teilchendurchmesser 60 $\mu$m, BET-Oberfläche 1,5 m$^2$/g) wurde im Wirbelschichtreaktor unter Verwirbelung mit insgesamt 800 l/h Stickstoff auf 190°C erhitzt. Dabei wurde die Hälfte der Stickstoffmenge durch eine auf 40°C temperierte Vorlage mit Titantetrachlorid geleitet. Zusätzlich wurden 200 l/h durch eine auf 50°C temperierte Wasservorlage geleitete Luft eingeblasen. Innerhalb von 12 h wurden so 140 g Titantetrachlorid zugeführt.

Ein Rakelabzug des erhaltenen bläulichen schimmernden, mit Titandioxid beschichteten Pigments ergab die CIELAB-Werte:

L = 104,1; a* = 0,5; b* = -5,9; C = 5,9; H = 274,9.

b) Zur weiteren Beschichtung des erhaltenen Pigments mit metallischem Eisen wurden insgesamt 800 l/h Stickstoff als Wirbelgas eingesetzt, von dem die Hälfte durch eine auf Raumtemperatur gehaltene Vorlage mit Eisenpentacarbonyl geleitet wurde. Innerhalb von 20 h wurden so 400 g Fe(CO)$_5$ in den auf 180-220°C erhitzten Reaktor überführt.

Beim anschließenden Abkühlen des Reaktors wurde dem Wirbelgas zur Passivierung pyrophorer Anteile der abgeschiedenen Eisenschicht etwas Luft zugesetzt.

Das erhaltene intensiv blaue Pigment hatte einen Eisengehalt von 19,7 Gew.-% und einen Titangehalt von 12,7 Gew.-%.

Ein Rakelabzug ergab die CIELAB-Werte:

L = 72,4; a* = -3,2; b* = -14,0; C = 14,4; H = 257,0.

B) Herstellung von dreifach beschichteten Glanzpigmenten

Beispiel 2

a) Analog Beispiel 1 wurde 200 g Aluminiummischung durch Zufuhr von 381 g Titantetrachlorid beschichtet.

b) Zur weiteren Beschichtung des grünlich gelb schimmernden Pigments mit metallischem Chrom wurden insgesamt 800 l/h Stickstoff als Wirbelgas eingesetzt, von dem die Hälfte durch eine auf 80°C erwärmte Vorlage mit Chromhexacarbonyl geleitet wurde. Auf die Weise wurden 24 g Cr(CO)$_6$ in den auf 190°C erhitzten Reaktor überführt.

c) Zur zusätzlichen Beschichtung des erhaltenen Pigments mit Chromoxid (Cr$_2$O$_3$) wurden die gleichen Verfahrensbedingungen wie in Schritt b) gewählt. Zusätzlich wurden noch 200 l/h durch eine auf 35°C temperierte Wasservorlage geleitete Luft eingeblasen. Auf die Weise wurden noch 48 g Cr(CO)$_6$ thermisch zersetzt.

Das erhaltene grünlich gelbe Pigment hatte einen Chromgehalt von 2,7 Gew.-% und einen Titangehalt von 22,7 Gew.-%.

Ein Rakelabzug ergab die CIELAB-Werte:

L = 95,8; a* = -3,0; b* = 7,8; C = 8,3; H = 111,0.

## Patentansprüche

1. Glanzpigmente auf der Basis von mehrfach beschichteten plättchenförmigen metallischen Substraten mit
   A) einer ersten, farblosen oder selektiv absorbierenden Schicht aus Metalloxid,
   B) einer zweiten, nichtselektiv absorbierenden Schicht aus Kohlenstoff, Metall und/oder Metalloxid und
   C) gewünschtenfalls einer dritten, farblosen oder selektiv absorbierenden Schicht aus Metalloxid.

2. Glanzpigmente nach Anspruch 1, bei denen die einzelnen Schichten im wesentlichen bestehen aus
   A) Titan-, Zirkon-, Silicium-, Zinn-, Chrom- und/oder Eisenoxid,
   B) Kohlenstoff, Eisen, Cobalt, Nickel, Chrom, Molybdän, Wolfram, Magnetit, Nikkeloxid, Cobaltoxid und/oder Vanadinoxid und
   C) Titan-, Zirkon-, Silicium-, Zinn-, Chrom- und/oder Eisenoxid.

3. Glanzpigmente nach Anspruch 1 oder 2, bei denen das metallische Substrat im wesentlichen aus Aluminium besteht.

4. Verfahren zur Herstellung der Glanzpigmente gemäß den Ansprüchen 1 bis 3, dadurch gekennzeichnet, daß man das metallische Substrat zunächst
   a) durch Gasphasenzersetzung flüchtiger Metallverbindungen in Gegenwart von Sauerstoff und/oder Wasserdampf mit einer farblosen oder selektiv absorbierenden Metalloxidschicht, dann

b1) durch thermische Zersetzung von sauerstoffhaltigen Kohlenwasserstoffen, die bei zwei enthaltenen Kohlenstoffatomen mindestens ein Sauerstoffatom enthalten, mit einer Kohlenstoffschicht,

b2) durch Gasphasenzersetzung flüchtiger Metallverbindungen in einem Inertgas mit einer Metallschicht oder

b3) durch Gasphasenzersetzung flüchtiger Metallverbindungen in Gegenwart von Sauerstoff und/oder Wasserdampf mit einer nichtselektiv absorbierenden Metalloxidschicht und gewünschtenfalls anschließend

c) wie in Schritt a) mit einer weiteren farblosen oder selektiv absorbierenden Metalloxidschicht belegt.

5. Verfahren nach Anspruch 4, dadurch gekennzeichnet, daß man als flüchtige Metallverbindungen in Schritt a), b3) und c) die Carbonyle, Halogenide, Oxychloride oder Alkoholate und in Schritt b2) die Carbonyle einsetzt.

6. Verfahren nach Anspruch 4, dadurch gekennzeichnet, daß man als sauerstoffhaltige Kohlenwasserstoffe Zucker einsetzt.

7. Verwendung der Glanzpigmente gemäß den Ansprüchen 1 bis 3 zur Einfärbung von Lakken, Druckfarben, Kunststoffen, Gläsern, keramischen Produkten und Zubereitungen der dekorativen Kosmetik.

**Claims**

1. Luster pigments based on multiply coated plateletlike metallic substrates comprising

    A) a first, colorless or selectively absorbing layer of metal oxide,

    B) a second, nonselectively absorbing layer of carbon, metal and/or metal oxide, and

    C) if desired a third, colorless or selectively absorbing layer of metal oxide.

2. Luster pigments as claimed in claim 1, wherein the individual layers consist essentially of

    A) titanium oxide, zirconium oxide, silicon oxide, tin oxide, chromium oxide and/or iron oxide,

    B) carbon, iron, cobalt, nickel, chromium, molybdenum, tungsten, magnetite, nickel oxide, cobalt oxide and/or vanadium oxide, and

    C) titanium oxide, zirconium oxide, silicon oxide, tin oxide, chromium oxide and/or iron oxide.

3. Luster pigments as claimed in claim 1 or 2, wherein the metallic substrate consists essentially of aluminum.

4. A process for preparing the luster pigments of claims 1 to 3, which comprises coating the metallic substrate first with

    a) a colorless or selectively absorbing metal oxide layer by gas phase decomposition of volatile metal compounds in the presence of oxygen and/or water vapor, then with

    b1) a carbon layer by thermal decomposition of oxygen-containing hydrocarbons that for every two carbon atoms contain at least one oxygen atom, with

    b2) a metal layer by gas phase decomposition of volatile metal compounds in an inert gas, or with

    b3) a nonselectively absorbing metal oxide layer by gas phase decomposition of volatile metal compounds in the presence of oxygen and/or water vapor, and if desired subsequently with

    c) a further colorless or selectively absorbing metal oxide layer as in step a).

5. A process as claimed in claim 4, wherein the volatile metal compounds used in steps a), b3) and c) are carbonyls, halides, oxychlorides or alkoxides and in step b2) carbonyls.

6. A process as claimed in claim 4, wherein the oxygen-containing hydrocarbons used are sugars.

7. Use of the luster pigments of any of claims 1 to 3 for coloring paints, printing inks, plastics, glasses, ceramic products and decorative cosmetic preparations.

**Revendications**

1. Pigments brillants à base de substrats métalliques en paillettes revêtus de plusieurs couches, à savoir

    A) d'une première couche en oxyde métallique, incolore ou à absorption sélective,

    B) d'une deuxième couche en carbone, en métal et/ou en oxyde métallique à absorption non sélective et

    C) si on le désire, d'une troisième couche d'oxyde métallique, incolore ou à absorption sélective.

2. Pigments brillants selon la revendication 1, dans lesquels les différentes couches se composent essentiellement

A) d'oxyde de titane, de zirconium, de silicium, d'étain, de chrome et/ou de fer,
B) de carbone, de fer, de cobalt, de nickel, de chrome, de molybdène, de tungstène, de magnétite, d'oxyde de nickel, d'oxyde de cobalt et/ou d'oxyde de vanadium, et
C) d'oxyde de titane, de zirconium, de silicium, d'étain, de chrome et/ou de fer.

3. Pigments brillants selon la revendication 1 ou 2, dans lesquels le substrat métallique se compose essentiellement d'aluminium.

4. Procédé de préparation des pigments brillants selon l'une quelconque des revendications 1 à 3, caractérisé en ce que l'on enduit le substrat métallique
a) d'abord d'une couche d'oxyde métallique incolore ou à absorption sélective, par décomposition en phase gazeuse de composés métalliques volatils, en présence d'oxygène et/ou de vapeur d'eau, puis
b1) d'une couche de carbone, par décomposition thermique d'hydrocarbures oxygénés qui contiennent au moins on atome d'oxygène pour deux atomes de carbone contenus,
b2) d'une couche de métal, par décomposition en phase gazeuse de composés métalliques volatils dans un gaz inerte, ou
b3) d'une couche d'oxyde métallique à absorption non sélective, par décomposition en phase gazeuse de composés métalliques volatils en présence d'oxygène et/ou de vapeur d'eau, et ensuite, si on le désire,
c) d'une autre couche d'oxyde métallique incolore ou à absorption sélective, comme dans l'étape a).

5. Procédé selon la revendication 4, caractérisé en ce que l'on utilise, comme composés métalliques volatils dans les étapes a), b3) et c), les carbonyles, les halogénures, les oxychlorures ou les alcoolates et, dans l'étape b2), les carbonyles.

6. Procédé selon la revendication 4, caractérisé en ce que l'on utilise des sucres comme hydrocarbures oxygénés.

7. Utilisation des pigments brillants selon les revendications 1 à 3 pour la coloration de laques, d'encres d'imprimerie, de matières plastiques, de verres, de produits céramiques et de préparations pour la cosmétique de maquillage.